(19) Europäisches Patentamt
European Patent Office
Office européen des brevets

(11) **EP 3 190 711 B1**

(12) **FASCICULE DE BREVET EUROPEEN**

(45) Date de publication et mention
de la délivrance du brevet:
**23.05.2018 Bulletin 2018/21**

(51) Int Cl.:
*H04B 1/00* (2006.01)      *G06F 7/48* (2006.01)
*H04L 27/38* (2006.01)

(21) Numéro de dépôt: **17150338.6**

(22) Date de dépôt: **05.01.2017**

(54) **RÉCEPTEUR RF À POURSUITE DE FRÉQUENCE**

RF-EMPFÄNGER MIT FREQUENZVERFOLGUNG

RF RECEIVER WITH FREQUENCY TRACKING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.01.2016 FR 1650117**

(43) Date de publication de la demande:
**12.07.2017 Bulletin 2017/28**

(73) Titulaire: **Commissariat à l'Energie Atomique et
aux Energies
Alternatives
75015 Paris (FR)**

(72) Inventeur: **DEHMAS, François
38450 VIF (FR)**

(74) Mandataire: **Brevalex
56, Boulevard de l'Embouchure
B.P. 27519
31075 Toulouse Cedex 2 (FR)**

(56) Documents cités:
**FR-A1- 2 977 943      US-B1- 6 771 715**

• **NAHM S ET AL: "A CORDIC-BASED DIGITAL
QUADRATURE MIXER: COMPARISON WITH A
ROM-BASED ARCHITECTURE", ISCAS '98.
PROCEEDINGS OF THE 1998 IEEE
INTERNATIONAL SYMPOSIUM ON CIRCUITS
AND SYSTEMS. MONTEREY, CA, MAY 31 - JUNE
3, 1998; [IEEE INTERNATIONAL SYMPOSIUM ON
CIRCUITS AND SYSTEMS], NEW YORK, NY :
IEEE, US, vol. 4, 31 mai 1998 (1998-05-31), pages
385-388, XP000873520, ISBN: 978-0-7803-4456-3**
• **XU LI ET AL: "CORDIC based algorithm for
frequency offset estimation", COMMUNICATION
TECHNOLOGY (ICCT), 2010 12TH IEEE
INTERNATIONAL CONFERENCE ON, IEEE,
PISCATAWAY, NJ, USA, 11 novembre 2010
(2010-11-11), pages 817-820, XP031849751, ISBN:
978-1-4244-6868-3**
• **KRSTIC M ET AL: "Optimized low-power
synchronizer design for the IEEE 802.11a
standard", PROCEEDINGS OF INTERNATIONAL
CONFERENCE ON ACOUSTICS, SPEECH AND
SIGNAL PROCESSING (ICASSP'03) 6-10 APRIL
2003 HONG KONG, CHINA; [IEEE
INTERNATIONAL CONFERENCE ON
ACOUSTICS, SPEECH, AND SIGNAL
PROCESSING (ICASSP)], IEEE, 2003 IEEE
INTERNATIONAL CONFE, vol. 2, 6 avril 2003
(2003-04-06), pages 333-336, XP010640949, DOI:
10.1109/ICASSP.2003.1202362 ISBN:
978-0-7803-7663-2**

**Description**

**DOMAINE TECHNIQUE**

La présente invention concerne le domaine des récepteurs RF et plus particulièrement des récepteurs destinés à être utilisés dans des systèmes de télécommunication à bande étroite, à très longue portée et à très bas débit tels que ceux envisagés pour l'Internet des objets ou IoT (*Internet of Things*).

**ÉTAT DE LA TECHNIQUE ANTÉRIEURE**

De manière générale, un récepteur RF nécessite de poursuivre la fréquence du signal transmis par l'émetteur. En effet, les fréquences centrales à l'émission et à la réception ne sont jamais parfaitement égales en raison de l'imprécision des oscillateurs et de leur dérive en température. En outre, la vitesse relative de déplacement du récepteur par rapport à l'émetteur engendre un effet Doppler et donc une dérive de fréquence qu'il faut pouvoir compenser.

Différentes solutions ont été proposées dans l'état de la technique pour estimer le décalage en fréquence ou CFO (*Carrier Frequency Offset*) entre émetteur et récepteur et le compenser à la réception. Il est notamment connu de prévoir une boucle de poursuite de fréquence en sortie de l'étage de démodulation en quadrature pour contrôler la fréquence des oscillateurs VCOs (*Voltage Controlled Oscillators*) de cet étage. Ainsi, le signal reçu est ramené constamment en bande de base ou à une fréquence intermédiaire fixe. Différents types de boucles de poursuite de fréquence sont décrits par exemple dans l'article de F.D. Natali intitulé « AFC tracking algorithms » publié dans IEEE Trans. on Comm., Vol. COM-32, No.8, Août 1984.

Plus récemment, il a été proposé dans la demande FR-A-2977943, concernant un système de transmission à bande étroite et à faible débit, d'effectuer à la réception une estimation aveugle du décalage de fréquence à partir du signal RF lui-même, après conversion en numérique, et de compenser ce décalage en fréquence sur les échantillons de ce signal.

Toutefois, cette boucle de poursuite de fréquence nécessite des calculs relativement complexes, ce qui exige une surface de silicium importante et conduit à une consommation élevée, difficilement compatible avec le niveau de puissance disponible dans un objet connecté. Même US-A-6771715 et l'article "A CORDIC-based Digital Quadrature Mixer: Comparison with a ROM-based Architecture", Nahm et al. décrient de l'art antérieur relevante. L'objet de la présente invention est par conséquent de proposer un récepteur RF disposant d'une boucle de poursuite en fréquence particulièrement simple et robuste, se prêtant bien à une transmission à faible débit sur bande étroite.

**EXPOSÉ DE L'INVENTION**

La présente invention est définie par un récepteur à poursuite de dérive de fréquence, destiné à recevoir des paquets de symboles modulant un signal RF, ledit récepteur comprenant un étage RF pour translater le signal RF reçu à une fréquence intermédiaire au moyen d'un mélangeur en quadrature et numériser le signal ainsi obtenu, le récepteur comprenant en outre :

un mélangeur numérique utilisant un CORDIC pour ramener en bande de base le signal translaté en fréquence ainsi numérisé, le CORDIC effectuant une rotation de phase de chaque échantillon en fonction d'une estimée de la fréquence intermédiaire ;
un module de traitement numérique en bande de base destiné à se synchroniser par rapport aux paquets de symboles et à estimer les données transmises dans lesdits paquets, et à déterminer à partir des données ainsi estimées, le signe de variation de la dérive de fréquence pour chaque symbole, la fréquence intermédiaire étant estimée par intégration de corrections de pas élémentaires de fréquence de valeur prédéterminée affectés par les signes ainsi déterminés.

Avantageusement, le module de traitement numérique en bande de base comprend au moins trois filtres adaptés à la forme de l'impulsion ayant servi à moduler le signal RF, un premier filtre adapté étant centré sur la fréquence nulle, un second filtre adapté étant décalé par rapport au premier filtre adapté d'un écart de fréquence positif prédéterminé et le troisième filtre adapté étant décalé par rapport au premier filtre adapté, d'une écart de fréquence négatif prédéterminé, les signaux de sortie des trois filtres adaptés étant fournis d'une part à un commutateur et à un module de synchronisation contrôlant ledit commutateur pour sélectionner un signal de sortie d'un filtre adapté.

De préférence, les paquets de symboles comprennent chacun un préambule de synchronisation, un délimiteur de trame prédéterminé et une trame de données, le module de synchronisation recherche un délimiteur de trame dans les signaux de sortie et sélectionne le signal de sortie dans lequel le délimiteur de trame a été trouvé.

Si le module de synchronisation détecte un délimiteur de trame dans plusieurs signaux de sortie, il sélectionne parmi ceux-ci le signal de sortie de plus forte puissance.

Le signal de sortie sélectionné peut être ensuite ré-échantillonné par un décimateur contrôlé par le module de synchronisation, le décimateur fournissant des échantillons à la fréquence symbole.

Avantageusement, le module de synchronisation détermine dans au moins une séquence d'échantillons correspondant à une impulsion, l'échantillon de plus forte amplitude et contrôle le le décimateur de manière à sélectionner pour chaque symbole cet échantillon.

Si les données ont été modulées au moyen d'une modulation DBPSK, chaque échantillon en sortie du décimateur est multiplié avec le conjugué de l'échantillon précédent au moyen d'un démodulateur DBPSK pour fournir des symboles d'une constellation de modulation BPSK.

Les symboles BPSK en sortie du démodulateur peuvent être multipliés dans un module de correction angulaire par le conjugué d'une grandeur caractéristique d'une rotation de la constellation de modulation BPSK pour fournir des symboles corrigés.

Dans ce cas, un estimateur peut alors effectuer une estimation dure sur les symboles corrigés pour estimer les données.

L'estimateur peut avantageusement estimer les données en déterminant le signe de la partie réelle des symboles corrigés.

Le module d'estimation de rotation angulaire effectue avantageusement une multiplication entre les symboles BPSK en sortie du démodulateur DBPSK avec des symboles caractéristiques des données estimées pour fournir une grandeur caractéristique de la rotation de la constellation BPSK entre deux symboles consécutifs.

Le récepteur à poursuite de dérive de fréquence peut comprendre en outre un module déterminant le sens de variation de la dérive de fréquence à partir du signe de la partie imaginaire de ladite grandeur caractéristique.

Le cas échéant, la grandeur caractéristique peut être filtrée par un filtre passe-bas avant d'être fournie au dit module de correction angulaire.

Le récepteur à poursuite de dérive de fréquence peut comprendre en outre un second commutateur, relié au module de synchronisation et au module d'estimation de rotation angulaire destiné à fournir au module de correction angulaire les symboles constituant le délimiteur de trame pendant une phase de synchronisation et ladite grandeur caractéristique filtrée pendant la réception de la trame de données.

Le pas de fréquence peut être avantageusement choisi inférieur à $1/16T$ où $T$ est la période symbole.

## BRÈVE DESCRIPTION DES DESSINS

D'autres caractéristiques et avantages de l'invention apparaîtront à la lecture d'un mode de réalisation préférentiel de l'invention, en faisant référence aux figures jointes parmi lesquelles :

La Fig. 1 représente schématiquement l'architecture d'un récepteur RF selon un mode de réalisation de l'invention ;
La Fig. 2 représente schématiquement l'étage RF du récepteur de la Fig. 1 ;
La Fig. 3 représente schématiquement l'étage de traitement numérique en bande de base du récepteur de la Fig. 1;
La Fig. 4 représente le format d'un paquet de transmission ;
La Fig. 5 illustre la poursuite en fréquence du récepteur RF au cours d'une trame pour différents exemples de dérive en fréquence ;
La Fig. 6 représente le taux d'erreurs paquet obtenu en sortie du récepteur de la Fig. 1, en fonction du rapport signal à bruit, pour différents exemples de dérive en fréquence.

## EXPOSÉ DÉTAILLÉ DE MODES DE RÉALISATION PARTICULIERS

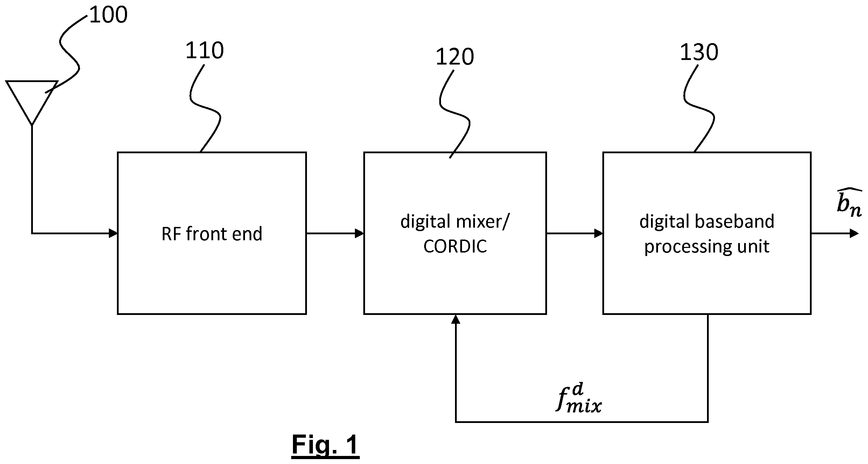

Nous considérerons dans la suite un récepteur présentant l'architecture générale de la Fig. 1.

Le récepteur comprend un étage RF, 110, connecté à l'antenne 100, ayant pour fonction de ramener le signal RF à une fréquence intermédiaire flottante, $f_i^a$, et de l'échantillonner, un mélangeur numérique 120, ayant pour fonction de ramener le signal en bande de base, et un module de traitement numérique en bande de base, 130, qui sera détaillé plus loin.

Le mélangeur numérique 120 est réalisé à partir d'un CORDIC (*COordinate Rotation DIgital Computer*) effectuant à chaque instant une rotation de phase pour ramener le signal de la fréquence intermédiaire $f_i^a$ en bande de base. Plus précisément, si l'on note $T_e$ la période d'échantillonnage et $k$ l'indice de l'échantillon, la rotation de phase effectuée à l'instant $kT_e$ est :

$$\Delta\varphi = -2\pi f_{mix}^{d}.kT_{e} \quad \text{modulo } 2\pi \tag{1}$$

où $f_{mix}^{d} = \widehat{f_{i}^{a}}$ est une valeur de fréquence reçue par le CORDIC, correspondant à une estimation de $f_{i}^{a}$.

Pour réaliser cette rotation de phase $\Delta\varphi$, le CORDIC procède par rotations élémentaires de valeurs $+d\varphi$ ou $-d\varphi$ ($d\varphi$ étant positif) selon le signe de la rotation de phase. L'incrément de phase élémentaire $d\varphi$ est choisi tel que tan $(d\varphi) = 2^{-p}$ où $p$ variant de 0 à $N$ où $N$ est choisi suffisamment grand en fonction du degré de précision voulu. Plus précisément, à l'itération $p$ le CORDIC reçoit un vecteur d'entrée $\mathbf{v}_{p}$ et calcule pour chaque rotation élémentaire un vecteur de sortie $\mathbf{v}_{p+1}$ tel que :

$$\mathbf{v}_{p+1} = \mathbf{R}_{\varepsilon\delta\varphi}\mathbf{v}_{p} \tag{2}$$

où $\mathbf{R}_{\varepsilon\delta\varphi}$ est la matrice de rotation de $\varepsilon.d\varphi$ définie par :

$$\mathbf{R}_{\varepsilon\delta\varphi} = \begin{pmatrix} 1 & -\varepsilon.2^{-p} \\ \varepsilon.2^{-p} & 1 \end{pmatrix} \tag{3}$$

On comprend que l'opération de rotation élémentaire est particulièrement simple puisqu'elle se réduit à de simples décalages et additions/soustractions.

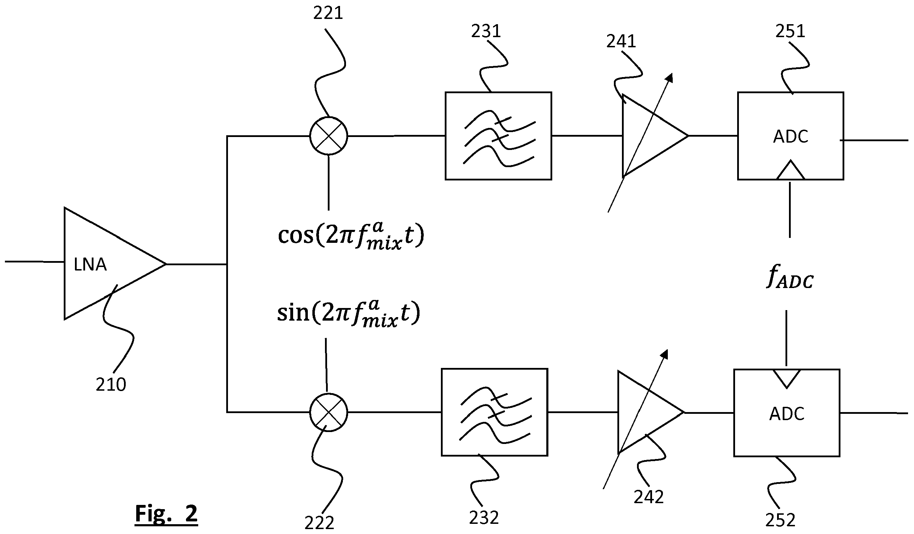

La Fig. 2 représente de manière schématique l'étage RF de la Fig. 1.

Celui-ci comprend un amplificateur bas bruit ou LNA, 210, un mélangeur en quadrature (mélangeurs 221,222), translatant la fréquence centrale du signal, $f_{0}$, à une fréquence intermédiaire $f_{i}^{a} = f_{0} - f_{mix}^{a}$ où $f_{mix}^{a}$ est la fréquence de l'oscillateur fournissant les sinusoïdes en quadrature aux mélangeurs 221,222. Il est important de noter que la première fréquence intermédiaire $f_{i}^{a}$ n'est pas ici une fréquence fixe mais varie en fonction de la fréquence centrale choisie, de la dérive de la fréquence centrale choisie pour la transmission ainsi que celle de l'oscillateur.

Les signaux en quadrature en sortie du mélangeur sont ensuite filtrés au moyen des filtres passe-bas 231,232 avant d'être amplifiés, puis convertis au moyen des convertisseurs analogique-numérique 251 et 252. Le cas échéant, les signaux en quadrature peuvent ensuite subir une étape de filtrage passe-bas en numérique puis une première étape de décimation (non représentées).

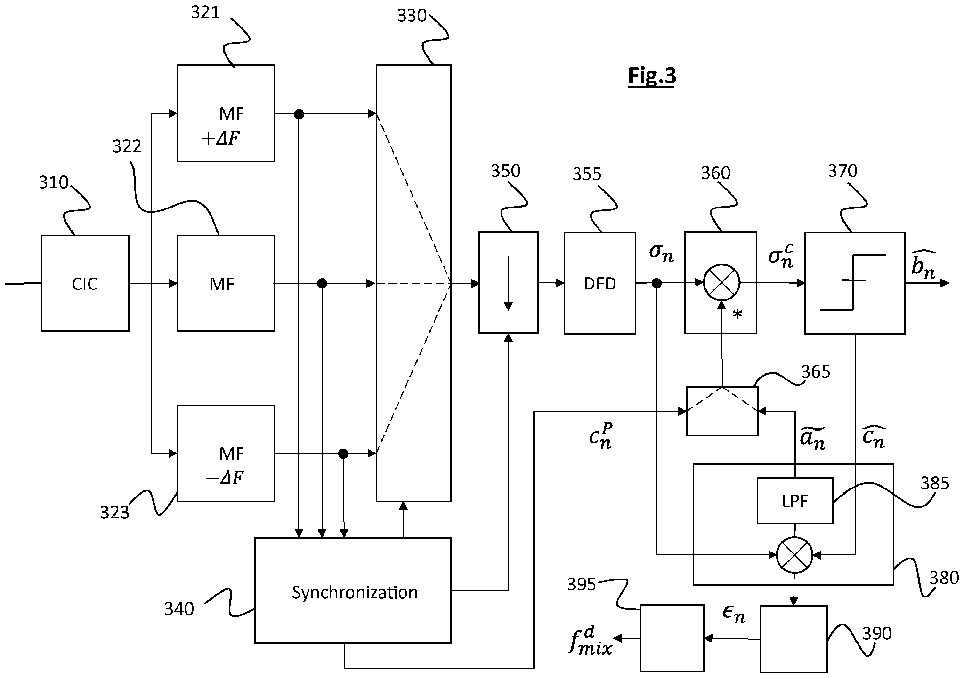

En tout état de cause, les couples d'échantillons en quadrature, après filtrage et décimation éventuels, sont fournis au mélangeur numérique 120 de la Fig. 1 sous la forme d'un vecteur. Les composantes en quadrature du vecteur ayant subi la rotation sont alors transmises à l'étage de traitement numérique en bande de base représenté en Fig. 3.

Pour des raisons de commodité, les liaisons entre les modules de cette figure sont indiquées par de simples flèches. On comprendra toutefois que les échantillons traités sont des échantillons complexes et comportent par conséquent une partie réelle et une partie imaginaire.

L'étage de traitement numérique en bande de base comprend un module optionnel de filtrage/décimation, 310, réalisé par exemple sous la forme d'un filtre CIC *(Cascaded Integrator Comb filter)*. Ce filtre CIC permet d'éliminer des interféreurs éventuels et de réduire la cadence d'échantillonnage.

Le signal numérique en bande de base est ensuite filtré par trois filtres adaptés 321, 322, 323, disposés en parallèle. Le filtre 322 est un filtre adapté à la forme des impulsions transmises, centré sur la fréquence nulle. Les filtres 321 et 323 sont des versions de ce même filtre adapté, respectivement décalées d'un décalage en fréquence $+\Delta F, -\Delta F$ par rapport à la fréquence nulle. De manière générale, on pourra prévoir une pluralité de filtres adaptés, présentant la même fonction de transfert à un décalage de fréquence près, l'un d'entre eux étant centré sur la fréquence nulle, et les autres étant distribués symétriquement autour de cette fréquence.

Les filtres adaptés sont simultanément actifs dans une première phase, dite phase de synchronisation, qui sera détaillée plus loin. Au terme de cette phase de synchronisation, on sélectionne le filtre adapté le mieux centré sur le signal en bande de base. Ce filtre adapté reste ensuite actif pour toute la durée du paquet, les autres filtres adaptés étant rendus inactifs ou leurs sorties inhibées.

Dans le cas présent, les signaux en sortie des trois filtres adaptés 321-323 sont fournis, d'une part, au commutateur 330 et, d'autre part, au module de synchronisation 340.

Le module de synchronisation, 340, détermine, pendant la période de synchronisation, le filtre adapté dont le signal de sortie présente la plus forte puissance, par exemple en comparant l'énergie des différents signaux de sortie sur la durée de la période de synchronisation. Le module de synchronisation 340 détermine également, à partir des signaux de sortie, le début de la trame de données et sélectionne le filtre adapté en conséquence. Enfin, le module de synchronisation 340 détermine les instants d'échantillonnage des symboles, chaque symbole donnant lieu à une pluralité d'échantillons en sortie des filtres adaptés.

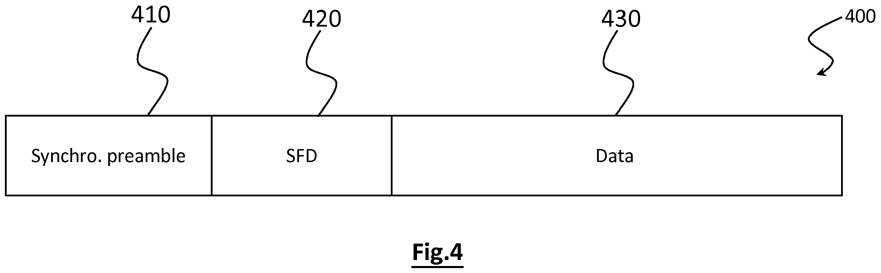

Plus précisément, on a représenté en Fig. 4 un paquet de transmission, 400. Celui-ci comporte un préambule de synchronisation, 410, un délimiteur de début de trame ou SFD (*Start of Frame Delimiter*), 420 et une trame de données, 430. Le module de synchronisation détermine pendant le préambule de synchronisation (par exemple une séquence de bits alternés), le signal de plus forte puissance en sortie des filtres adaptés 321-323. Le module de synchronisation connaissant la séquence de symboles constituant le délimiteur SFD, tente d'identifier dans chacun des signaux de sortie (par exemple au moyen d'une corrélation ou d'une simple comparaison) le début de la trame de données.

Le module de synchronisation sélectionne alors le filtre adapté dont le signal de sortie lui a permis d'identifier le délimiteur SFD. Au cas où le module de synchronisation identifierait le délimiteur SFD dans plusieurs signaux de sortie, le module de synchronisation détermine celui de plus forte puissance et sélectionne le filtre adapté en conséquence, au moyen du commutateur 330.

Les données du paquet se présentent sous la forme de symboles DBPSK (*Differential Binary Phase Shift Keying*) voire de symboles BPSK *(Binary Phase Shift Keying)*, chaque symbole modulant une impulsion filtrée par un filtre de formation d'impulsion ou PSF (*Pulse Shaping Filter*).

Du côté du récepteur, en sortie du filtre adapté sélectionné, chaque symbole donne lieu à une pluralité $K$ d'échantillons successifs où $K$ est le rapport de la cadence des échantillons en sortie du module 310 par rapport à la

$$K = \frac{T}{T_e} \, .$$

cadence symbole, soit                Le module de synchronisation 340 détermine l'instant optimal d'échantillonnage parmi la pluralité des instants successifs (celui de plus grande amplitude).

Les échantillons de signal en sortie du filtre adapté sélectionné sont ré-échantillonnés par le décimateur 350. A cet effet, le module de synchronisation 340 fournit l'instant optimal à un décimateur 350, de facteur de décimation $K$. Les échantillons en sortie du décimateur 350 sont par conséquent à la cadence symbole.

La modulation utilisée par l'émetteur peut être une modulation BPSK ou, de préférence, une modulation DBPSK.

Lorsque l'émetteur utilise une modulation différentielle (DBPSK), les échantillons en sortie du décimateur 350 sont d'abord soumis à une démodulation différentielle en 355. Celle-ci est réalisée de manière connue en effectuant le produit hermitien de l'échantillon courant par l'échantillon précédent. Le démodulateur différentiel 355 n'est bien entendu pas présent en cas d'une modulation directe, de type BPSK.

Les échantillons en sortie du décimateur 350, le cas échéant après démodulation différentielle en 355, sont des symboles BPSK. Ils subissent une correction angulaire en 360, pour compenser la rotation de la constellation de modulation, comme décrit plus loin. Les symboles sont ensuite estimés par décision dure au moyen de l'estimateur 370, à partir des échantillons ainsi corrigés.

Le module 380 estime une grandeur caractéristique de la rotation angulaire de la constellation de modulation à partir des symboles estimés et des échantillons en sortie du décimateur 350. Cette grandeur caractéristique est filtrée au moyen d'un filtre passe-bas (LPF) avant d'être fournie au module de correction angulaire 360.

Ladite grandeur caractéristique est également fournie au module 390 qui en déduit le sens de la variation de la dérive de fréquence, $\varepsilon_n$, entre deux symboles consécutifs.

Le module intégrateur 395 effectue une somme des corrections successives de fréquence, les corrections successives valant $\varepsilon_n.\delta f$ où $\delta f$ est un pas de fréquence prédéterminé. Cette somme de corrections successives est fournie au mélangeur numérique 120 comme estimée de la fréquence intermédiaire, $\widehat{f_i^a}$ .

Le fonctionnement de l'étage de traitement numérique en bande de base sera explicité dans le cas d'une modulation DBPSK. Le signal transmis par l'émetteur peut alors s'exprimer sous la forme :

$$s_{Tx}(t) = A\cos\left(2\pi f_0 t + \alpha\right)\sum_k d_k p_0(t - kT) \qquad\qquad (4)$$

où A est l'amplitude du signal transmis, $f_0$ est la fréquence centrale du signal, $\alpha$ la phase à l'origine, $p_0(t)$ la forme de l'impulsion (par exemple en racine de cosinus surélevé ou RRC pour *Root Raised Cosine),* $T$ est la période symbole et $d_k$ les symboles DBPSK. On rappelle que les symboles DBPSK sont obtenus à partir des bits de données $b_k$ au moyen de :

$$b'_k = b_k \oplus b'_{k-1}$$

$$d_k = +1 \quad \text{si} \ b'_k = 0$$

$$d_k = -1 \quad \text{si} \ b'_k = 1 \tag{5}$$

et, réciproquement :

$$d_k d_{k-1} = +1 \quad \Rightarrow \quad b_k = 0$$

$$d_k d_{k-1} = -1 \quad \Rightarrow \quad b_k = 1 \tag{5'}$$

Le signal ré-échantillonné en sortie du décimateur 350 a alors la forme suivante :

$$s_{dbd}(n) = B \exp\left(i\left(2\pi\left(f_0 - f_1\right)nT + \varphi\right)\right).\sum_k d_n p_1\left((n-k)T\right) + N(n) \tag{6}$$

où B est l'amplitude du signal en sortie du filtre adapté sélectionné, $f_1$ est la somme de la fréquence du mélangeur analogique $\left(f_{mix}^a\right)$ et de la fréquence du mélangeur numérique $\left(f_{mix}^d\right)$, $\varphi$ est une phase dépendant de la phase de la porteuse et des phases des mélangeurs, $p_1(t)$ la fonction d'autocorrélation de la forme d'impulsion $p_0(t)$ (ou de manière équivalente, le signal $p_0(t)$ filtré par le filtre adapté), et $N(n)$ un échantillon de bruit.

Après démodulation différentielle, les échantillons en sortie du module 355, s'expriment sous la forme suivante :

$$\begin{aligned}
\sigma_n &= s_{dbd}(n)s^*_{dbd}(n-1) \\
&= B^2 \exp\left(i2\pi\left(f_0 - f_1\right)T\right)d_n d_{n-1} + B \exp\left(i2\pi\left(f_0 - f_1\right)nT + i\varphi\right)N^*(n-1) \\
&\quad + B \exp\left(-i2\pi\left(f_0 - f_1\right)(n-1)T - i\varphi\right)N(n) + N(n).N^*(n-1)
\end{aligned}$$

$$\tag{7}$$

Si l'on suppose que le rapport signal à bruit est suffisant, autrement dit, les termes où apparaissent le bruit peuvent être négligés, soit :

$$\sigma_n = B^2 \exp\left(i2\pi\left(f_0 - f_1\right)T\right)d_n d_{n-1} \tag{8}$$

Lorsque la poursuite en fréquence est bien réalisée par le mélangeur numérique, on a :

$$\left|2\pi\left(f_0 - f_1\right)T\right| \ll \pi / 2 \tag{9}$$

Si l'on fait, pour l'instant, abstraction de la correction angulaire dans le module 360, l'estimateur 370 estime les valeurs BPSK, $c_n$, au moyen de la décision dure :

$$\widehat{c_n} = \text{sgn}\left(\text{Re}\left(\sigma_n\right)\right) \tag{10}$$

les bits de données s'en déduisant de manière canonique, $\widehat{b_n} = \dfrac{1 - \widehat{c_n}}{2}$ avec la convention de modulation définie en (5).

Le module 380 estime la rotation angulaire instantanée de la constellation de modulation à partir de :

$$\widehat{\theta}_n = \arg\left(\sigma_n \widehat{c}_n\right) \qquad (11\text{-}1)$$

ou, plus précisément, estime la grandeur caractéristique correspondante :

$$a_n = B^2 e^{i\widehat{\theta}_n} = \sigma_n \widehat{c}_n \qquad (11\text{-}2)$$

Il est important de noter que la multiplication de $\sigma_n$ par les symboles estimés $\widehat{c}_n$ permet de se débarrasser de l'influence des données.

La grandeur complexe $a_n$ est avantageusement filtrée par un filtre passe-bas (LPF), par exemple un filtre récursif avec facteur d'oubli. La grandeur complexe ainsi filtrée, $\tilde{a}_n$, est utilisée pour compenser la rotation de la constellation dans le module 360 en calculant le produit hermitien :

$$\sigma_n^c = \sigma_n \widetilde{a}_n^{\,*} \qquad (12)$$

Ainsi, lorsque la compensation angulaire est active, ce sont les échantillons corrigés, $\sigma_n^c$, c'est-à-dire les échantillons corrigés de la rotation angulaire qui interviennent en fait dans l'expression (10).

Le module 390 détermine le sens de la variation de fréquence (ou de la dérive en fréquence) entre deux échantillons consécutifs :

$$\varepsilon_n = \mathrm{sgn}\left(\mathrm{Im}\left(\sigma_n \widehat{c}_n\right)\right) \qquad (13)$$

Ce calcul de signe est particulièrement simple, il permet de suivre la variation de fréquence de manière robuste. La correction de fréquence se fait par pas de $\delta f$, avec :

$$\delta f = \frac{\delta\varphi}{2\pi}\frac{1}{T} \qquad (14)$$

où $\delta\varphi$ est un saut de phase prédéterminé.

De préférence, on choisira $\delta f < 1/16T$ de sorte que le saut de phase correspondant, $\left|\delta\varphi\right| \le \frac{\pi}{8}$, ne perturbe pas l'estimation des bits.

Le module intégrateur 395 calcule ensuite la fréquence $f_{mix}^d$, somme de la fréquence initiale supposée $f_{mix}^{d\_init}$ et des corrections successives :

$$f_{mix}^d = f_{mix}^{d\_init} + \delta f \sum_n \varepsilon_n \qquad (15)$$

Cette fréquence est fournie au mélangeur numérique 120 comme estimée de la fréquence intermédiaire, $\widehat{\tilde{f}_i^a}$. Le mélangeur numérique effectue la rotation de phase $\Delta\varphi_{n+1}$ obtenue par récurrence :

$$\Delta\varphi_{n+1} = \Delta\varphi_n - 2\pi f_{mix}^d T \qquad (16)$$

Au moyen de cette poursuite en fréquence, le signal en sortie du mélangeur numérique, à la fréquence $\Delta f = f_0 - f_1$, avec $f_1 = f_{mix}^a + f_{mix}^d$, est maintenu au sein de la réponse spectrale du filtre adapté sélectionné.

La compensation de rotation angulaire de la constellation de modulation intervient, d'une part, lors de la phase de synchronisation et d'autre part lors de la réception des données.

Lors de la phase de synchronisation, le récepteur connait la séquence de symboles pilotes $c_n^P$ du préambule. La séquence de symboles en sortie de chacun des filtres adaptée est corrélée avec la séquence de symboles pilotes. Les pics de corrélation successifs permettent de déterminer les instants de décimation à la fréquence symbole dans le décimateur 350.

En outre, la connaissance des symboles pilotes permet d'estimer la rotation angulaire au moyen de :

$$a_n^P = \sigma_n \left( c_n^P \right)^* \tag{17}$$

Les symboles $c_n^P$ sont directement fournis par le module de synchronisation 340 au module de correction angulaire 360. Ainsi, pendant la phase de synchronisation, la rétroaction de la sortie de l'estimateur 370 vers le module de correction angulaire est inhibée. Pendant cette phase, il n'y a pas davantage de rétroaction du module intégrateur 395 vers le CORDIC 120.

Le commutateur 365 bascule de position entre la phase de synchronisation et la phase de réception des données. Plus précisément, pendant la phase de synchronisation, il transmet au module de correction angulaire 360 les valeurs des pics de corrélation (éventuellement filtrés à l'aide d'un filtre passe-bas) issus du module de synchronisation 340 et, pendant la phase de réception des données, les symboles $\tilde{a}_n$ issus du filtre passe-bas 385.

La compensation de rotation angulaire est réalisée au moyen du produit hermitien $\sigma_n^c = \sigma_n \left( a_n^P \right)^*$ pendant la phase de synchronisation et au moyen du produit $\sigma_n^c = \sigma_n \widetilde{a}_n^*$ pendant la phase de réception des données. Cette compensation permet de corriger la rotation fine de la constellation due au décalage entre la fréquence $\Delta f$ et l'écart de fréquence réel $\Delta f_{est}$, représenté par la grandeur $a_n^P$ (pendant la phase de synchronisation) et $\tilde{a}_n$ (pendant la phase de réception des données).

Le récepteur décrit ci-dessus est destiné à recevoir des symboles DBPSK. L'homme du métier comprendra toutefois qu'un mode de réalisation destiné à recevoir des symboles BPSK pourra être alternativement envisagé. Dans ce cas, comme indiqué plus haut, le module de démodulation différentielle 355 est supprimé et la grandeur $a_n$ calculée par le module 380 est obtenue par $a_n = \sigma_n \widehat{c_n}$ où $\widehat{c_n}$ est ici le symbole BPSK correspondant au bit $\widehat{b_n}$ estimé par l'estimateur 370 (autrement dit $\widehat{c_n} = +1$ si $\widehat{b_n} = 1$ et $\widehat{c_n} = -1$ si $\widehat{b_n} = 0$). Comme précédemment, on neutralise ainsi l'effet de la modulation dû aux données.

On donnera ci-après un exemple numérique illustrant une application de l'invention au domaine de l'Internet des objets. Le signal est transmis dans la bande ISM à 868 MHz. La fréquence centrale du signal est autour de 869.5 MHz dans une bande de 48 kHz. Le format des paquets de transmission est celui de la Fig. 4. Le débit est de 100 bits/s, autrement dit $T = 10$ ms et la modulation est une modulation DBPSK. La fréquence de mélange du mélangeur analogique est de 868,6 MHz et donc la fréquence intermédiaire, en l'absence de poursuite de fréquence, est de l'ordre de 900000 Hz. Les convertisseurs analogique-numérique 241-242 de l'étage RF délivrent des échantillons à une fréquence d'échantillonnage de 13,572 MHz. Une première étape de décimation est réalisée au niveau de l'étage RF et une seconde étape de décimation est réalisée dans le module de filtrage/ décimation 310. En sortie les échantillons sont fournis à une cadence de 600 Hz, soit 6 échantillons par symbole. Les filtres adaptés sont ici des filtres RRC. Le filtre central 322 est centré sur 0Hz, le filtre 321 est centré sur +50Hz et le filtre 323 est centré sur -50Hz. Le décimateur 350 effectue un ré-échantillonnage avec un facteur 6 pour revenir à un échantillon par symbole. Le pas de fréquence $\delta\!f$ est choisi égal à 1 Hz, autrement dit à chaque symbole la fréquence ne peut varier que de $\pm$ 1 Hz.

Dans la suite, on supposera que les paramètres de configuration du récepteur sont ceux indiqués ci-dessus.

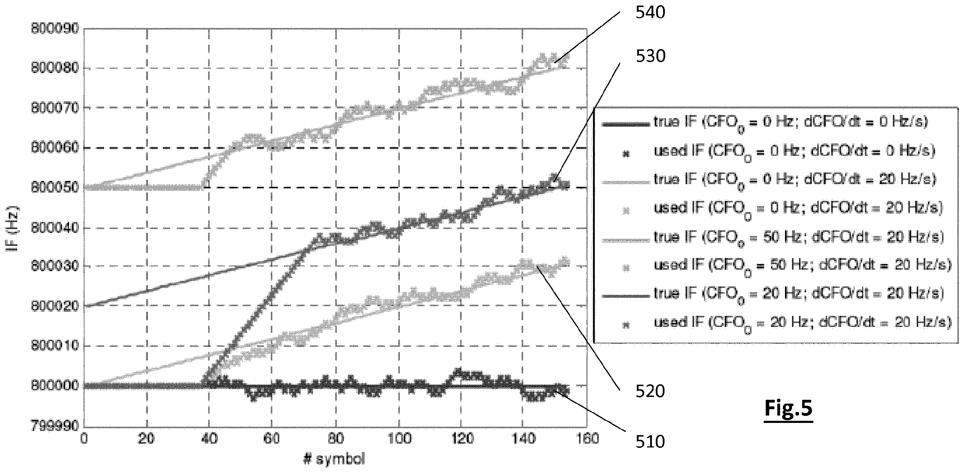

La Fig. 5 représente la poursuite en fréquence du récepteur RF au cours d'une trame pour différents exemples de dérive en fréquence.

L'exemple 510 correspond à un offset de fréquence nul au début du paquet et une absence de dérive pendant le paquet.

L'exemple 520 correspond à un offset de fréquence nul au début du paquet et une dérive de 20 Hz/s pendant le paquet.

L'exemple 530 correspond à un offset de fréquence de 20 Hz au début du paquet et une dérive de 20 Hz/s pendant le paquet.

L'exemple 540 correspond à un offset de fréquence de 50 Hz au début du paquet et une dérive de 20 Hz/s pendant le paquet.

On voit que la fréquence intermédiaire commandant le mélangeur numérique (CORDIC) commence à suivre la dérive de fréquence au terme de la période de synchronisation (40 symboles). En effet, pendant la période de synchronisation la correction de fréquence au moyen du CORDIC n'est pas active.

On remarquera que, dans les exemples 510-530, le filtre adapté centré sur 0 Hz est sélectionné, le rattrapage de la dérive par le mélangeur numérique se faisant plus tardivement lorsque l'offset de départ est plus important (cf. 530 par rapport à 520).

Dans l'exemple 540, le filtre adapté centré sur +50 Hz est sélectionné. Là encore, la fréquence intermédiaire commence à suivre la dérive de fréquence au terme de la phase de synchronisation.

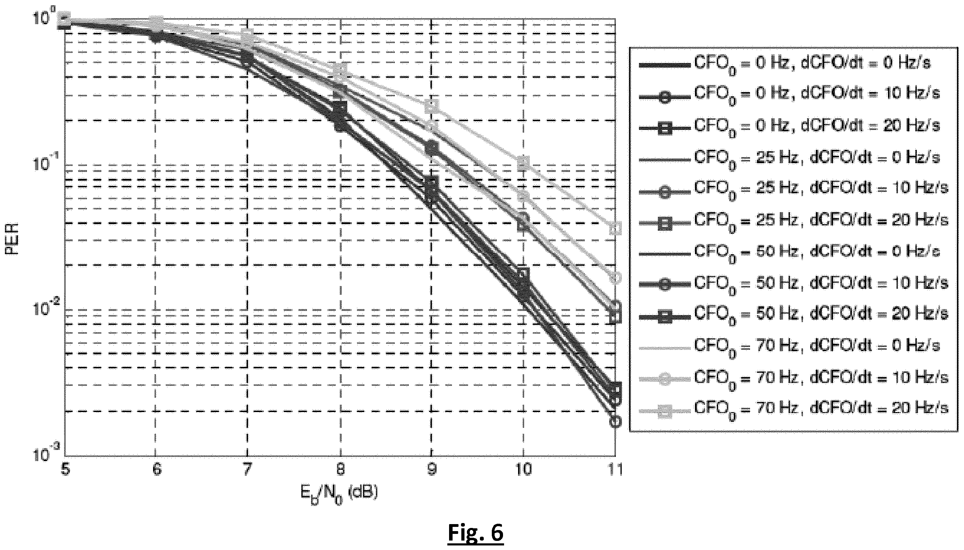

La Fig. 6 représente les performances du récepteur de la Fig. 1, en termes de taux d'erreurs paquet ou PER *(Packet Error Rate)* en fonction du rapport signal à bruit, et ce pour différents exemples de dérive en fréquence.

On remarque que le taux d'erreurs paquet (PER) reste inférieur à 10% dès que le rapport signal à bruit est supérieur à 10 dB et ce même en cas d'une importante dérive en fréquence.

## Revendications

1. Récepteur à poursuite de dérive de fréquence, destiné à recevoir des paquets de symboles modulant un signal RF, ledit récepteur comprenant un étage RF (110) pour translater le signal RF reçu à une fréquence intermédiaire au moyen d'un mélangeur en quadrature (221-222) et numériser le signal ainsi obtenu, **caractérisé en ce qu'**il comprend en outre :

   un mélangeur numérique utilisant un CORDIC pour ramener en bande de base le signal translaté en fréquence ainsi numérisé, le CORDIC effectuant une rotation de phase ($\Delta\varphi$) de chaque échantillon en fonction d'une estimée de la fréquence intermédiaire ;
   un module de traitement numérique en bande de base (130) destiné à se synchroniser par rapport aux paquets de symboles et à estimer les données transmises dans lesdits paquets, et à déterminer à partir des données ainsi estimées, le signe ($\varepsilon_n$) de variation de la dérive de fréquence pour chaque symbole, la fréquence intermédiaire étant estimée par intégration de corrections de pas élémentaires de fréquence de valeur prédéterminée ($\delta f$) affectés par les signes ainsi déterminés.

2. Récepteur à poursuite de dérive de fréquence selon la revendication 1, **caractérisé en ce que** le module de traitement numérique en bande de base comprend au moins trois filtres adaptés (321-323) à la forme de l'impulsion ayant servi à moduler le signal RF, un premier filtre adapté (322) étant centré sur la fréquence nulle, un second filtre adapté (321) étant décalé par rapport au premier filtre adapté d'un écart de fréquence positif prédéterminé ($+\Delta F$) et le troisième filtre adapté (323) étant décalé par rapport au premier filtre adapté, d'une écart de fréquence négatif prédéterminé ($-\Delta F$), les signaux de sortie des trois filtres adaptés étant fournis d'une part à un commutateur (330) et à un module de synchronisation (340) contrôlant ledit commutateur pour sélectionner un signal de sortie d'un filtre adapté.

3. Récepteur à poursuite de dérive de fréquence selon la revendication 2, **caractérisé en ce que**, les paquets de symboles comprenant chacun un préambule de synchronisation (410), un délimiteur de trame prédéterminé (420) et une trame de données (430), le module de synchronisation recherche un délimiteur de trame dans les signaux de sortie et sélectionne le signal de sortie dans lequel le délimiteur de trame a été trouvé.

4. Récepteur à poursuite de dérive de fréquence selon la revendication 3, **caractérisé en ce que**, si le module de synchronisation détecte un délimiteur de trame dans plusieurs signaux de sortie, il sélectionne parmi ceux-ci le signal de sortie de plus forte puissance.

5. Récepteur à poursuite de dérive de fréquence selon la revendication 3 ou 4, **caractérisé en ce que** le signal de sortie sélectionné est ensuite ré-échantillonné par un décimateur contrôlé par le module de synchronisation, le décimateur fournissant des échantillons à la fréquence symbole.

6. Récepteur à poursuite de dérive de fréquence selon la revendication 5, **caractérisé en ce que** le module de synchronisation détermine dans au moins une séquence d'échantillons correspondant à une impulsion, l'échantillon de plus forte amplitude et contrôlde le décimateur de manière à sélectionner pour chaque symbole cet échantillon.

**7.** Récepteur à poursuite de dérive de fréquence selon la revendication 6, **caractérisé en ce que** les données ayant été modulées au moyen d'une modulation DBPSK, chaque échantillon en sortie du décimateur est multiplié avec le conjugué de l'échantillon précédent au moyen d'un démodulateur DBPSK (355) pour fournir des symboles d'une constellation de modulation BPSK.

**8.** Récepteur à poursuite de dérive de fréquence selon la revendication 7, **caractérisé en ce que** les symboles BPSK en sortie du démodulateur sont multipliés dans un module de correction angulaire (360) par le conjugué d'une grandeur caractéristique d'une rotation de la constellation de modulation BPSK pour fournir des symboles corrigés.

**9.** Récepteur à poursuite de dérive de fréquence selon la revendication 8 en ce qu'un estimateur (370) effectue une estimation dure sur les symboles corrigés pour estimer les données.

**10.** Récepteur à poursuite de dérive de fréquence selon la revendication 9, **caractérisé en ce que** l'estimateur estime les données en déterminant le signe de la partie réelle des symboles corrigés.

**11.** Récepteur à poursuite de dérive de fréquence selon la revendication 9 ou 10, **caractérisé en ce qu'**un module d'estimation de rotation angulaire (380) effectue une multiplication entre les symboles BPSK en sortie du démodulateur DBPSK avec des symboles $(\widehat{c_n})$ caractéristiques des données estimées $(\widehat{b_n})$ pour fournir une grandeur caractéristique de la rotation de la constellation BPSK entre deux symboles consécutifs.

**12.** Récepteur à poursuite de dérive de fréquence selon la revendication 11, **caractérisé en ce qu'**il comprend un module (390) déterminant le sens de variation de la dérive de fréquence à partir du signe de la partie imaginaire de ladite grandeur caractéristique.

**13.** Récepteur à poursuite de dérive de fréquence selon l'une des revendications 10 à 12, **caractérisé en ce que** la grandeur caractéristique est filtrée par un filtre passe-bas avant d'être fournie au dit module de correction angulaire (360).

**14.** Récepteur à poursuite de dérive de fréquence selon la revendication 13, **caractérisé en ce qu'**il comprend un second commutateur (365), relié au module de synchronisation (340) et au module d'estimation de rotation angulaire (380) destiné à fournir au module de correction angulaire (360) les symboles constituant le délimiteur de trame pendant une phase de synchronisation et ladite grandeur caractéristique filtrée pendant la réception de la trame de données.

**15.** Récepteur à poursuite de dérive de fréquence selon une des revendications précédentes **caractérisé en ce que** ledit pas de fréquence est inférieur à 1/16T où T est la période symbole.

**Patentansprüche**

**1.** Empfänger mit Frequenzdriftverfolgung zum Empfangen von Symbolpaketen, die ein HF-Signal modulieren, wobei der Empfänger eine HF-Stufe (110) zum Übertragen des mit einer Zwischenfrequenz empfangenen HF-Signals mittels eines Quadraturmischers (221 - 222) und zum Digitalisieren des so erhaltenen Signals aufweist, **dadurch gekennzeichnet, dass** er ferner enthält:

einen digitalen Mischer, der einen CORDIC verwendet, um das so digitalisierte übertragene Frequenzsignal in das Basisband rückzuführen, wobei der CORDIC eine Phasenrotation ($\Delta\varphi$) jeder Abtastung in Abhängigkeit von einer Schätzung der Zwischenfrequenz durchführt;
ein digitales Basisband-Verarbeitungsmodul (130) zum Synchronisieren mit den Symbolpaketen und zum Schätzen der Daten, die in den Paketen übertragen werden, und zum Bestimmen des Vorzeichens ($\varepsilon_n$) der Veränderung der Frequenzdrift für jedes Symbol ausgehend von den so geschätzten Daten, wobei die Zwischenfrequenz durch Integrieren von Korrekturen elementarer Frequenzschritte mit vorbestimmtem Wert ($\delta f$) geschätzt wird, die durch die so bestimmten Vorzeichen beeinflusst werden.

**2.** Empfänger mit Frequenzdriftverfolgung nach Anspruch 1, **dadurch gekennzeichnet, dass** das digitale Basisband-Verarbeitungsmodul zumindest drei Filter (321 - 323) umfasst, die an die Form des zur Modulation des HF-Signals verwendeten Pulses angepasst sind, ein wobei ein erstes angepasstes Filter (322) auf die Nullfrequenz zentriert ist, ein zweites angepasstes Filter (321) bezüglich des ersten angepassten Filters um einen vorbestimmten positiven Frequenzabstand (+ΔF) verschoben ist und das dritte angepasste Filter (323) bezüglich des ersten angepassten Filters um einen vorbestimmten negativen Frequenzabstand (-ΔF) verschoben ist, wobei die Ausgangssignale der drei angepassten Filter einerseits einem Schalter (330) und einem Synchronisationsmodul (340) zugeführt werden, das den Schalter steuert, um ein Ausgangssignal eines angepassten Filters auszuwählen.

3. Empfänger mit Frequenzdriftverfolgung nach Anspruch 2, **dadurch gekennzeichnet, dass** die Symbolpakete jeweils eine Synchronisationspräambel (410), einen vorbestimmten Rahmenbegrenzer (420) und einen Datenrahmen (430) umfassen, wobei das Synchronisationsmodul in den Ausgangssignalen nach einem Rahmenbegrenzer sucht und das Ausgangssignal auswählt, in dem der Rahmenbegrenzer gefunden wurde.

4. Empfänger mit Frequenzdriftverfolgung nach Anspruch 3, **dadurch gekennzeichnet, dass** dann, wenn das Synchronisationsmodul einen Rahmenbegrenzer in mehreren Ausgangssignalen erfasst, er aus diesen das Ausgangssignal mit höherer Leistung auswählt.

5. Empfänger mit Frequenzdriftverfolgung nach Anspruch 3 oder 4, **dadurch gekennzeichnet, dass** das ausgewählte Ausgangssignal dann durch einen von dem Synchronisationsmodul gesteuerten Dezimator neu abgetastet wird, wobei der Dezimator Abtastwerte mit der Symbolfrequenz bereitstellt.

6. Empfänger mit Frequenzdriftverfolgung nach Anspruch 5, **dadurch gekennzeichnet, dass** das Synchronisationsmodul in mindestens einer Sequenz von Abtastungen, die einem Impuls entsprechen, den Abtastwert mit größerer Amplitude bestimmt und den Dezimator so steuert, dass er für jedes Symbol diesen Abtastwert auswählt.

7. Empfänger mit Frequenzdriftverfolgung nach Anspruch 6, **dadurch gekennzeichnet, dass** nachdem die Daten mittels DBPSK-Modulation moduliert worden sind, jeder Ausgangsabtastwert des Dezimators mit der Konjugierten des vorhergehenden Abtastwerts mittels eines DBPSK-Demodulators (355) multipliziert wird, um Symbole einer BPSK-Modulationskonstellation bereitzustellen.

8. Empfänger mit Frequenzdriftverfolgung nach Anspruch 7, **dadurch gekennzeichnet, dass** die BPSK-Symbole am Ausgang des Demodulators in einem Winkelkorrekturmodul (360) mit der Konjugierten einer Kenngröße einer Drehung der BPSK-Modulationskonstellation multipliziert werden, um korrigierte Symbole bereitzustellen.

9. Empfänger mit Frequenzdriftverfolgung nach Anspruch 8, **dadurch gekennzeichnet, dass** ein Schätzer (370) eine raue Schätzung der korrigierten Symbole durchführt, um die Daten zu schätzen.

10. Empfänger mit Frequenzdriftverfolgung nach Anspruch 9, **dadurch gekennzeichnet, dass** der Schätzer die Daten schätzt, indem er das Vorzeichen des Realteils der korrigierten Symbole bestimmt.

11. Empfänger mit Frequenzdriftverfolgung nach Anspruch 9 oder 10, **dadurch gekennzeichnet, dass** ein Drehwinkelschätzmodul (380) eine Multiplikation zwischen den BPSK-Symbolen am Ausgang des DBPSK-Demodulators mit Symbolen $\widehat{(c_n)}$ durchführt, die für die Schätzdaten $\widehat{(b_n)}$ charakteristisch sind, um eine Kenngröße der Drehung der BPSK-Konstellation zwischen zwei aufeinanderfolgenden Symbolen bereitzustellen.

12. Empfänger mit Frequenzdriftverfolgung nach Anspruch 11, **dadurch gekennzeichnet, dass** er ein Modul (390) enthält, das die Richtung der Veränderung der Frequenzdrift ausgehend von dem Vorzeichen des Imaginärteils der Kenngröße bestimmt.

13. Empfänger mit Frequenzdriftverfolgung nach einem der Ansprüche 10 bis 12, **dadurch gekennzeichnet, dass** die Kenngröße durch ein Tiefpassfilter gefiltert wird, bevor sie dem Winkelkorrekturmodul (360) bereitgestellt wird.

14. Empfänger mit Frequenzdriftverfolgung nach Anspruch 13, **dadurch gekennzeichnet, dass** er einen zweiten Schalter (365) enthält, der mit dem Synchronisationsmodul (340) und mit dem Drehwinkelschätzmodul (380) verbunden und dazu bestimmt ist, dem Winkelkorrekturmodul (360) die den Rahmenbegrenzer darstellenden Symbole während einer Synchronisationsphase und die gefilterte Kenngröße während des Empfangs des Datenrahmens bereitzustellen.

15. Empfänger mit Frequenzdriftverfolgung nach einem der vorangehenden Ansprüche, **dadurch gekennzeichnet, dass** der Frequenzschritt geringer als 1/16$T$ ist, wobei T die Symbolperiode ist.

**Claims**

1. Frequency drift tracking receiver designed to receive packets of symbols modulating an RF signal, said receiver comprising an RF stage (110) to translate the RF signal received at an intermediate frequency by means of a quadrature mixer (221-222) and to digitise the signal thus obtained, **characterised in that** it also comprises:

   a digital mixer using a CORDIC to bring the frequency translated signal thus digitised into the base band, the CORDIC making a phase rotation ($\Delta\varphi$) of each sample as a function of an estimate of the intermediate frequency; a base band digital processing module (130) designed to be synchronised with packets of symbols and to estimate data transmitted in said packets, and to determine the sign ($\varepsilon_n$) of the variation in the frequency drift for each symbol from the data thus estimated, the intermediate frequency being estimated by integration of corrections of elementary frequency steps by a predetermined value ($\delta f$) modified by the signs thus determined.

2. Frequency drift tracking receiver according to claim 1, **characterised in that** the base band digital processing module comprises at least three filters (321-323) matched to the shape of the pulse that was used to modulate the RF signal, a first matched filter (322) being centred on the zero frequency, a second matched filter (321) being offset relative to the first matched filter by a positive predetermined frequency difference ($+\Delta F$) and the third matched filter (323) being offset relative to the first matched filter by a negative predetermined frequency difference ($-\Delta F$), the output signals from the three matched filters being input firstly to a switch (330) and to a synchronisation module (340) controlling said switch to select a matched filter output signal.

3. Frequency drift tracking receiver according to claim 1, **characterised in that** each symbol packet comprises a synchronisation preamble (410), a predetermined frame delimiter and a data frame (430), the synchronisation module searches for a frame delimiter in the output signals and selects the output signal in which the frame delimiter was found.

4. Frequency drift tracking receiver according to claim 1, **characterised in that** if the synchronisation module detects a frame delimiter in several output signals, it selects the highest power output signal amongst these output signals.

5. Frequency drift tracking receiver according to claim 3 or 4, **characterised in that** selected output signal is then resampled by a decimator controlled by the synchronisation module, the decimator providing samples at the symbol frequency.

6. Frequency drift tracking receiver according to claim 5, **characterised in that** the synchronisation module determines the highest amplitude sample in at least one sequence of samples corresponding to a pulse, and controls the decimator so as to select this sample for each symbol.

7. Frequency drift tracking receiver according to claim 6, **characterised in that** data were modulated by means of a DBPSK modulation, each sample at the decimator output is multiplied with the conjugate of the previous sample by means of a DBPSK demodulator (355) to provide the symbols of a BPSK modulation constellation.

8. Frequency drift tracking receiver according to claim 7, **characterised in that** BPSK symbols at the output from the demodulator are multiplied in an angular correction module (360) by the conjugate of a magnitude characteristic of a rotation of the BPSK modulation constellation to output corrected symbols.

9. Frequency drift tracking receiver according to claim 8, **characterised in that** an estimator (370) makes a hard estimate on corrected symbols to estimate data.

10. Frequency drift tracking receiver according to claim 9, **characterised in that** the estimator estimates data by determining the sign of the real part of the corrected symbols.

11. Frequency drift tracking receiver according to claim 9 or 10, **characterised in that** an angular rotation estimating module (380) advantageously multiplies BPSK symbols at the output from the DBPSK demodulator with symbols ($\hat{c}_n$) characteristic of estimated data ($\hat{b}_n$) to supply a magnitude characteristic of the rotation of the BPSK constellation between two consecutive symbols.

**12.** Frequency drift tracking receiver according to claim 11, **characterised in that** it comprises a module (390) determining the direction of variation of the frequency drift starting from the sign of the imaginary part of said characteristic magnitude.

**13.** Frequency drift tracking receiver according to one of claims 10 or 12, **characterised in that** the characteristic magnitude is filtered by a low pass filter before being input to said angular correction module (360).

**14.** Frequency drift tracking receiver according to claim 13, **characterised in** it comprises a second switch (365), connected to the synchronisation module (340) and to the angular rotation estimating module (380) that will output symbols forming the frame delimiter during a synchronisation phase and said filtered characteristic magnitude during reception of the data frame, to the angular correction module (360).

**15.** Frequency drift tracking receiver according to one of the previous claims, **characterised in** said frequency pitch is less than 1/16T in which T is the symbol period.

**Fig. 1**

**Fig. 2**

Fig.3

EP 3 190 711 B1

**Fig.4**

EP 3 190 711 B1

Fig.5

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2977943 A
- US 6771715 A

**Littérature non-brevet citée dans la description**

- **F.D. NATALI.** AFC tracking algorithms. *IEEE Trans. on Comm.,* Août 1984, vol. COM-32 (8